# EUROPEAN PATENT APPLICATION

(11) **EP 1 103 581 A2**
(43) Date of publication of application: **30.05.2001**
(21) Application number: 00310442.9
(22) Date of filing: 24.11.2000
(51) Int. Cl.: C09C 3/12

(54) **Organosilicon compound-treated pigments, method of manufacture, and cosmetic preparations**

(30) Priority: 25.11.1999 JP 33491099
(71) Applicant: SHIN-ETSU CHEMICAL CO., LTD., Chiyoda-ku Tokyo (JP)
(72) Inventor: Yamaguchi,Hiromasa, c/o Silicone-Electronics Reser, Matsuida-machi, Usui-gun, Gunma-ken (JP)
(74) Representative: Stoner, Gerard Patrick

(57) **Abstract**

A pigment that has been surface-treated with a perfluoropolyether group-bearing silane coupling agent has excellent water and oil repellency, adhesion, and color extension by color pigments. When formulated in cosmetic preparations, it markedly improves the quality of the resulting products.

## Description

The present invention relates to organosilicon compound-treated pigments, including extender pigments. It also relates to a method of manufacturing such treated pigments, and to cosmetic preparations in which the treated pigments are formulated.

### BACKGROUND

Perfluoropolyether group-bearing compounds generally have a very low surface energy, endowing them with many desirable characteristics, such as water and oil repellency, chemical resistance, lubricity, release properties and stain-blocking properties. Accordingly, such compounds are used in a broad range of industrial applications, including water and oil repellents for paper and textiles, lubricants for magnetic recording media, oil-proofing agents for precision machinery, parting agents, cosmetic preparations and protective films.

However, the very same characteristics are manifested as non-stick, non-adhesive properties with respect to other materials. Even where such compounds can be applied to the surface of a substrate, film formation and adhesion to the substrate has been impossible to achieve.

Pigments, including extender pigments, which have been surface-treated with an organosilicon compound, especially methyl hydrogen polysiloxane, have a high water repellency and have been widely used in recent years primarily to endow makeup with better staying power and also in what are sometimes referred to as "two-way type" cosmetic preparations. Yet, such pigments have a number of drawbacks. For example, in pigments treated with methyl hydrogen polysiloxane, SiH groups remain on the molecule. As a result, when the treated pigment powder is formulated as a cosmetic preparation, it releases hydrogen gas over time. Moreover, treatment with methyl hydrogen polysiloxane is carried out at a high temperature, making it inappropriate for use with heat-sensitive pigments such as yellow iron oxide and Prussian blue.

Dimethylpolysiloxane could conceivably be used as the surface treatment agent to resolve the problem of residual SiH groups. However, it lacks reactive functional groups, and so does not adsorb to the pigment at a low temperature. At high temperatures of 200 to 350°C, crosslinking polymerization reactions occur due in part to methyl group scission, preventing suitable properties from being achieved.

In addition, pigments which have been surface treated with alkyl siloxanes such as methyl hydrogen polysiloxane, while achieving excellent water repellency, have failed to exhibit adequate oil repellency.

It is an object of the present invention to provide new and useful organosilicon compound-treated pigments. Preferably these provide significant or excellent water and oil repellency and adhesion, and color extension in color pigments. Preferably they have significant quality-enhancing effects when formulated in various types of cosmetic preparations. Another aspect of the invention is to provide a method of manufacturing such treated pigments. A further aspect of the invention is to provide cosmetic preparations in which treated pigments of this type are formulated.

The inventors have found that by surface treatment of a pigment with silane coupling agent having a perfluoropolyether group on the molecule, and especially with perfluoropolyether-modified aminosilane of general formula (1): 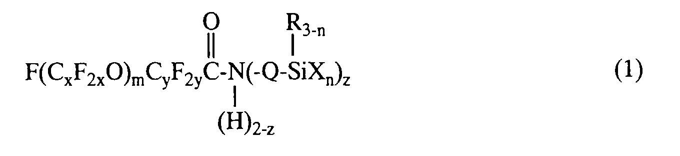 (wherein X is a hydrolyzable group, R is a lower alkyl or phenyl, Q is a divalent organic group, m is an integer from 1 to 50, n is 2 or 3, x and y are independently integers from 1 to 3, and z is 1 or 2), they obtained organosilicon compound-treated pigment which has excellent water and oil repellency, good adhesion to the skin, does not agglomerate, is very smooth and feels good to the touch, achieves a good color tone with very high color saturation when a color pigment is admixed, and contains no residual hydrogen. The inventors have also discovered that even pigments having a poor heat stability can be easily and effectively treated at a low temperature without relying on the use of a catalyst.

Accordingly, the invention provides an organosilicon compound-treated pigment in the form of a pigment that has been surface-treated with a silane coupling agent bearing a perfluoropolyether group on the molecule. The invention additionally provides a method of manufacturing a organosilicon compound-treated pigment by mixing a silane coupling agent bearing a perfluoropolyether group on the molecule, an organic solvent which dissolves the silane coupling agent, and a pigment, then treating and drying the mixture. The invention further provides a cosmetic material which includes the organosilicon compound-treated pigment.

### BRIEF DESCRIPTION OF THE DRAWINGS

FIG. 1 is an infrared absorption spectrum of a silane prepared in Synthesis Example 1.

FIG. 2 is an infrared absorption spectrum of a silane prepared in Synthesis Example 5.

### FURTHER EXPLANATIONS, OPTIONS AND PREFERENCES

In the practice of the invention, various types of pigments, including extender pigments, may be used without particular limitation as the pigment. Illustrative examples of suitable pigments include inorganic pigments such as titanium oxide, zinc oxide, zirconium oxide, yellow iron oxide, black iron oxide, red iron oxide, ultramarine, Prussian blue, chromium oxide and chromium hydroxide; pearlescent pigments such as titanium oxide-coated mica and bismuth oxychloride; and organic pigments such as coal-tar colorants and natural colorants. Additional examples include silica beads, plastic beads (e.g., nylon and acrylic resin), talc, kaolin, micas (e.g., muscovite and sericite), magnesium carbonate, calcium carbonate, aluminum silicate, magnesium silicate, calcium silicate and clays.

Of these, submicron particulate pigments including ultrafine titanium oxide, fine titanium oxide and color pigments (e.g., yellow iron oxide, black iron oxide, red iron oxide, ultramarine, Prussian blue, chromium oxide, chromium hydroxide and coal-tar colorants) are preferred for working the invention because of their excellent smoothness, adhesion and color extension.

In the invention, the organosilicon compound used to treat the pigment is a silane coupling agent having a perfluoropolyether group on the molecule. The use of a perfluoropolyether-modified aminosilane of formula (1) below is preferred because such compounds are easy to prepare and have excellent performance-enhancing effects.

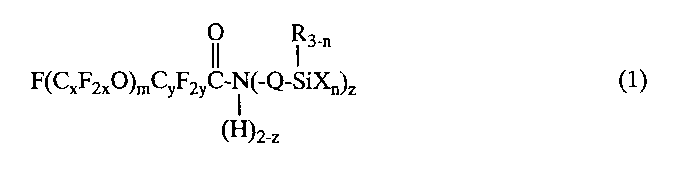

In formula (1), X is a hydrolyzable group, R is a lower alkyl or phenyl, Q is a divalent organic group, m is an integer from 1 to 50, n is 2 or 3, x and y are independently integers from 1 to 3, and z is 1 or 2.

Specific examples of the hydrolyzable group represented by X include C₁₋₆ alkoxy groups such as methoxy, ethoxy, propoxy and butoxy; C₂₋₈ oxyalkoxy groups such as methoxymethoxy and methoxyethoxy; C₂₋₈ acyloxy groups such as acetoxy; C₂₋₆ alkenyloxy groups such as isopropenoxy; and halogen groups such as chloro, bromo and iodo. Of these, methoxy, ethoxy, isopropenoxy and chloro are preferred.

In formula (1), R is lower (e.g. C₁₋₆, C₁₋₅ or C₁₋₄) alkyl or phenyl group. Examples include methyl, ethyl, propyl, butyl and phenyl, of which methyl is preferred.

Q represents a divalent organic group, preferred examples of which include C₁₋₈ alkylene groups which may be separated by a suitable group such as NH or NCH₃. Most preferably, Q is CH₂CH₂CH₂ or CH₂CH₂NHCH₂CH₂CH₂.

The letter m is an integer from 1 to 50. Above this range, the proportion of hydrolyzable groups in the overall molecule becomes so small as to make it difficult for the hydrolyzable group condensation reaction to proceed, which may result in poor film formation on the surface of particles. A value of m within a range of 15 to 35 is especially desirable for achieving a good balance between the desired functional characteristics and the reactivity of the organosilicon compound. The letter n is equal to 2 or 3. Alternatively, a compound in which n is 2 may be used in combination with a compound in which n is 3. The letter z is either 1 or 2, although z is preferably 2 for reasons that include better bond to the pigment. The letters x and y are each independently integers from 1 to 3.

It is preferable in the invention for the perfluoropolyether group to include a group of the following formula (2).

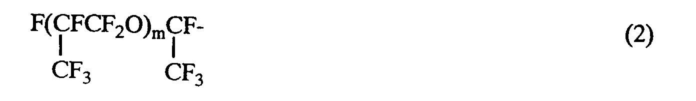

In formula (2), m is an integer from 1 to 50.

Perfluoropolyether groups as shown in formula (1) or (2) may be used on other kinds of silane having different dispositions or natures of the coupling group(s). Coupling groups may be hydrolysable groups as illustrated above for X.

Exemplary methods of preparing a perfluoropolyether-modified aminosilane suitable in the invention include, for compounds in which z is 2, preparation by a hydrosilylating reaction between the diallylamide derivative of the corresponding hexafluoropropylene oxide (HFPO) oligomer and the corresponding hydroxysilane.

The organosilicon compound-treated pigment of the invention can be prepared by mixing together a perfluoropolyether group-bearing silane coupling agent, an organic solvent in which the silane coupling agent is soluble and a pigment, then treating and drying the resulting mixture.

Any organic solvent which dissolves the silane coupling agent may be used in the invention, although fluorocarbon solvents are preferred for their solvency and pigment wetting ability. Exemplary fluorocarbon solvents include fluorinated aliphatic hydrocarbon solvents such as perfluoroheptane and perfluorooctane, fluorinated aromatic hydrocarbon solvents such as m-xylenehexafluoride and benzotrifluoride, and fluorinated ether solvents such as methyl perfluorobutyl ether and perfluoro(2-butyltetrahydrofuran).

In the practice of the invention, the silane coupling agent is used within a range of preferably 0.1 to 30 parts by mass, and especially 2 to 5 parts by mass, per 100 parts by mass of the pigment. The organic solvent is used within a range of preferably 1 to 50 parts by mass per 100 parts by mass of pigment.

No particular limitation is imposed on the method of mixing the silane coupling agent, organic solvent and pigment, although this can be carried out using an ordinary mixer or by some other suitable technique such as spraying.

The drying step is carried out at a treatment temperature which is suitably selected according to the heat resistance of the pigment and the flash point of the solvent. A drying temperature is preferably at least room temperature, more preferably at least 30°C, and most preferably at least 40°C. Not higher than 150°C is desirable. The treatment time may be selected as appropriate so long as it allows the solvent to be removed and the mixture to be fully dried. Where necessary, it may be effective to carry out treatment under moisture addition.

If necessary, an alkoxysilane hydrolytic condensation catalyst may be added during the foregoing treatment. Suitable examples include organotin compounds such as dibutyltin dimethoxide and dibutyltin dilaurate, organotitanium compounds such as tetra-n-butyltitanate, organic acids such as acetic acid and methanesulfonic acid, and inorganic acids such as hydrochloric acid and sulfuric acid. Of these, hydrochloric acid, acetic acid, tetra-n-butyltitanate and dibutyltin dilaurate are especially preferred.

When the inventive pigment is employed in cosmetic preparations, it is recommended to exclude organometallic compounds and nonvolatile acids such as sulfuric acid because these substances may remain in the pigment and have an adverse effect on the skin.

The cosmetic preparations of the invention contain the organosilicon compound-treated pigment. Cosmetic preparations in which use of the inventive pigment is effective include, but are not limited to, skin cosmetics such as powder foundation, liquid foundation, rouge and eye shadow. The treated pigment of the invention is incorporated in such cosmetic preparations in an amount which may be generally about the same as the amount in which conventional pigments are included in the same type of cosmetic. Known compounding ingredients suitable for the particular type of cosmetic being prepared may be used in ordinary amounts.

The organosilicon compound-treated pigment of the invention is produced by treating an extender pigment or other type of pigment with a perfluoropolyether-modified silane coupling agent having on one end a specific reactive end group such as an alkoxy group to thereby adsorb the silane coupling agent to the pigment in an oriented manner. The perfluoropolyether-modified silane coupling agent readily bonds to and has a high reactivity with various types of pigment powders, enabling treatment to be carried out under mild conditions. It can therefore be used to treat even pigments having a low heat stability. The resulting treated pigment is smooth, has a good sensory feel and excellent adhesion to the skin and does not agglomerate. By-products such as alcohols that form during surface treatment are easily removed by heating. In addition, we find that these perfluoropolyether-modified silane coupling agentsare able to uniformly impart to the surface of pigments such as extender pigments properties particular to perfluoropolyethers such as water and oil repellency. Cosmetic preparations containing pigments such as extender pigments which have been treated as described above and exhibit these excellent properties have excellent spreadability and adhesion to the skin, and particularly outstanding smoothness, in addition to which they have good durability to skin oils and perspiration. Color pigment-containing cosmetic preparations according to the invention may have very highly saturated colors.

### EXAMPLE

Synthesis examples, examples of the invention and comparative examples are given below by way of illustration, and are not intended to limit the invention.

### Synthesis Example 1

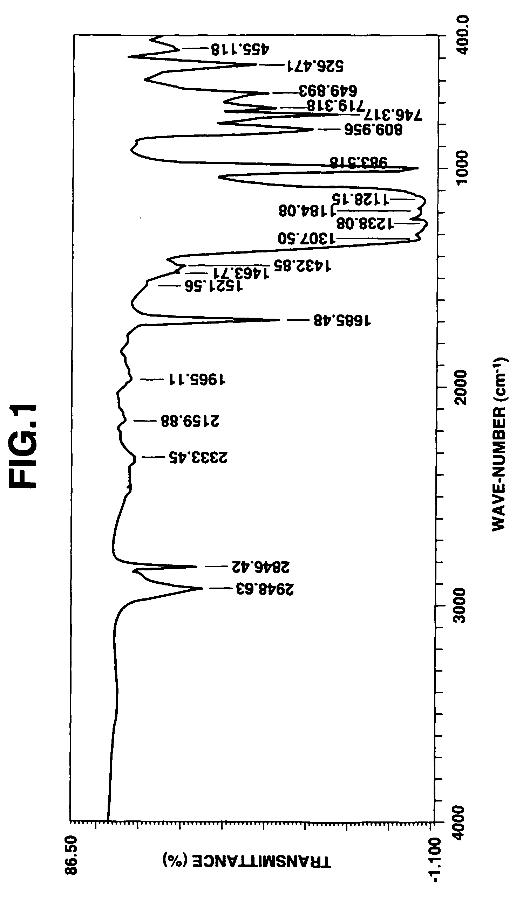

A 200-ml 3-necked flask equipped with a thermometer, reflux condenser and stirrer was charged with 87.1 g of the perfluoropolyether-modified diallylamide of the following formula (3): 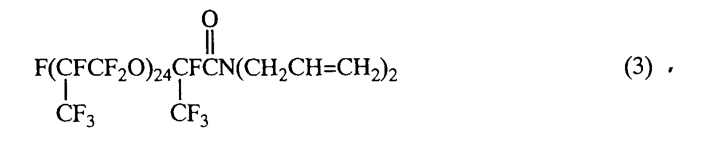 40.5 g of m-xylenehexafluoride and 0.094 g of a platinic chloride/vinylsiloxane complex in toluene (platinum content, 2.40×10⁻⁶ mol). The flask contents were mixed under heating at 80°C. Next, 7.3 g of trimethoxysilane was added dropwise and the mixture was aged at 85°C for 3 hours. Disappearance of the allyl groups from the starting materials was confirmed by ¹H-NMR analysis, following which the solvent and excess trimethoxysilane were removed by vacuum distillation, yielding 84.0 g of a clear, colorless liquid. The ¹H-NMR and IR spectral data for the compound thus obtained are given below.
¹H-NMR (TMS, ppm):
0.6-0.7 (-CH₂CH₂Si≡)
1.7-1.9 (-CH₂CH₂CH₂-)
3.3-3.5 (-CONCH₂CH₂-)
3.5-3.6 (-Si(OCH₃)₃)
IR (liquid film between KBr plates, cm⁻¹ ; see FIG. 1):
2950-2820 (C-H), 1680 (CON), 1315-1090 (C-F)

It is apparent from the spectral data that the compound prepared in this example has the following structural formula (4).

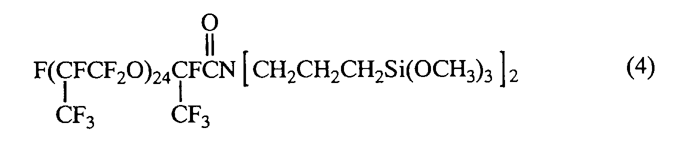

### Synthesis Example 2

Following the same method as in Synthesis Example 1 except that methyldimethoxysilane was used instead of trimethoxysilane as one of the starting materials, a compound of the formula (5): 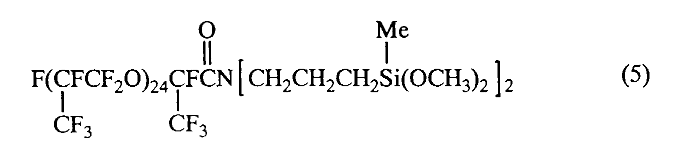 was prepared.

### Synthesis Example 3

Following the same method as in Synthesis Example 1 except that the compound of the formula (6): 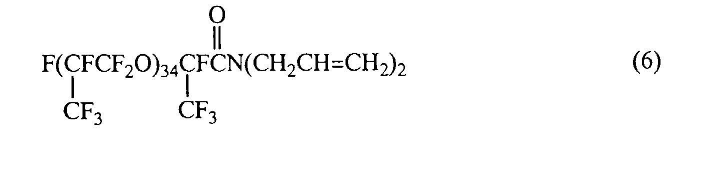 was used instead of the perfluoropolyether-modified diallylamide of formula (3) as one of the starting materials, a compound of the formula (7): 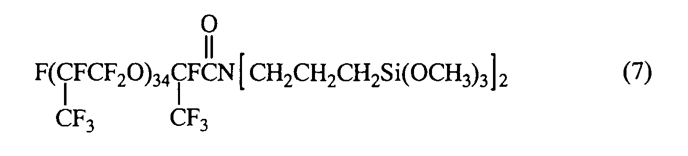 was prepared.

### Synthesis Example 4

Following the same method as in Synthesis Example 1 except that the compound of the formula (8): 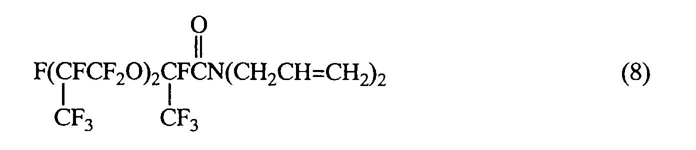 was used instead of the perfluoropolyether-modified diallylamide of formula (3) as one of the starting materials, a compound of the formula (9): 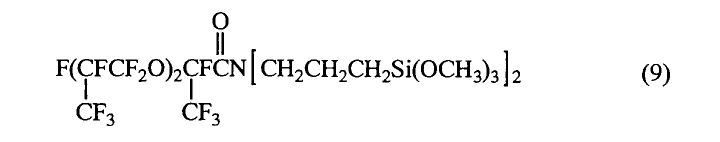 was prepared.

### Synthesis Example 5

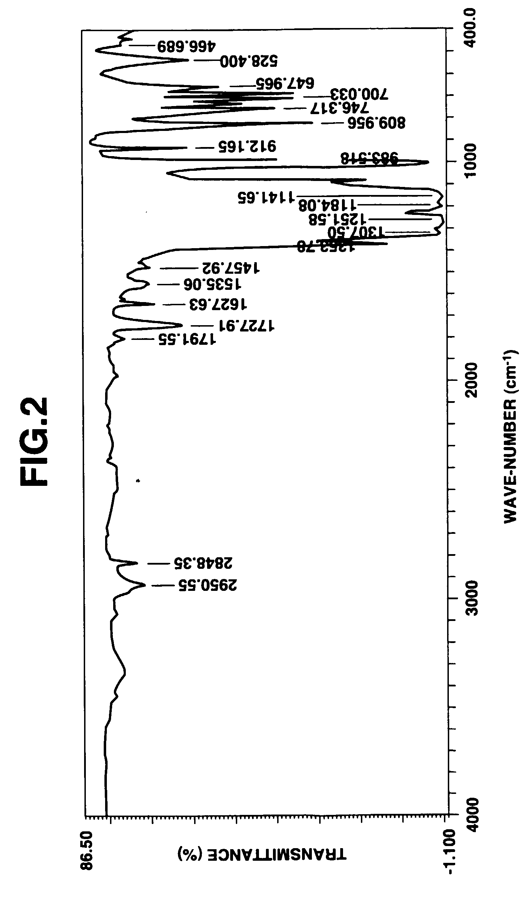

A 500-ml 4-necked flask equipped with a reflux condenser, thermometer and stirrer was charged with 254.8 g of the perfluoropolyether-modified methyl ester of the formula (10): 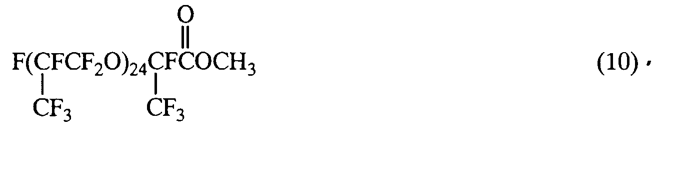 11.8 g of 3-aminopropyltrimethoxysilane and 127.4 g of m-xylenehexafluoride. The flask contents were heated at 70°C for 6 hours under a stream of nitrogen. After absorption of the ester was confirmed by IR spectral analysis to have ceased, the solvent and other volatile substances were removed by vacuum distillation, giving 260.3 g of a yellow viscous liquid. The ¹H-NMR and IR spectral data for the compound thus obtained are given below.
¹H-NMR (TMS, ppm):
0.7-1.0 (m, 2H, -CH₂Si≡)
1.8-2.0 (m, 2H, -CH₂CH₂CH₂-)
3.4-3.6 (m, 2H, -CONHCH₂-)
3.7 (s, 9H, -Si(OCH₃)₃)
7.3 (s, 1H, -CONH-)
IR (liquid film between KBr plates, cm⁻¹; see FIG. 2):
2950-2850 (C-H), 1710 (CONH), 1315-1110 (C-F).

It is apparent from the spectral data that the compound obtained in this example had the following structural formula (11).

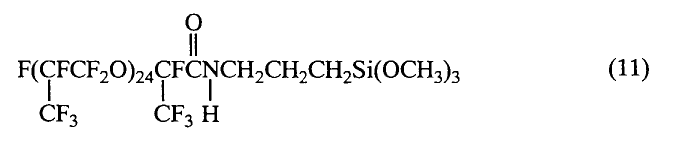

### Synthesis Example 6

By the same method as in Synthesis Example 5 aside from using the compound of the formula (12): 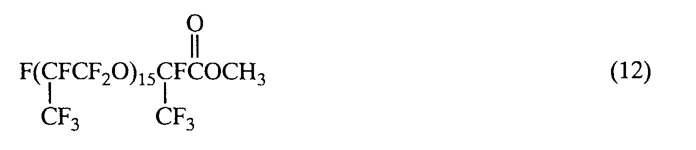 instead of the perfluoropolyether-modified methyl ester of formula (10) and using 3-aminopropyltriethoxysilane instead of 3-aminopropyltrimethoxysilane, a compound of the formula (13): 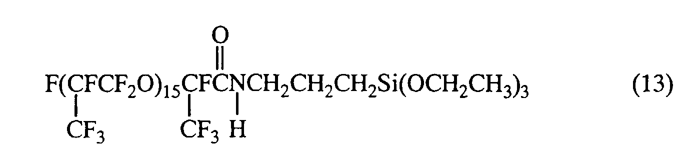 was prepared.

### Synthesis Example 7

By the same method as in Synthesis Example 5 aside from using the compound of the formula (14): 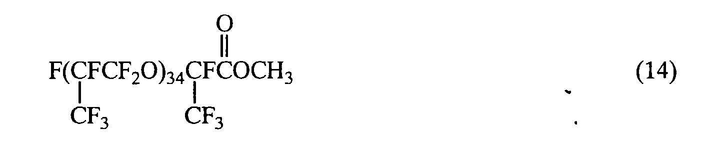 instead of the perfluoropolyether-modified methyl ester of formula (10), a compound of the formula of the formula (15): 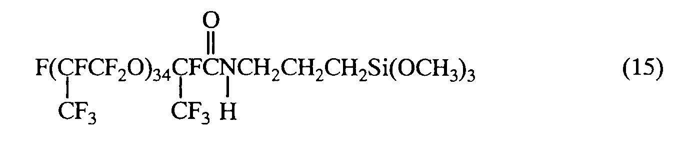 was prepared.

### Synthesis Example 8

By the same method as in Synthesis Example 5 aside from using the compound of the formula (16): 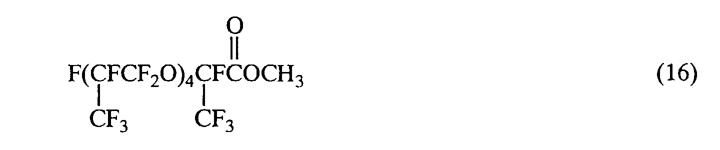 instead of the perfluoropolyether-modified methyl ester of formula (10), a compound of the formula (17): 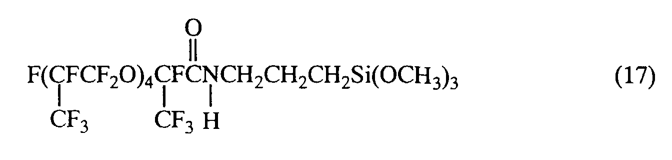 was prepared.

### Example 1

A 3-necked flask equipped with a stirring element was charged with 100 g of talc (produced by Asada Mill Co., Ltd.), 70 g of m-xylenehexafluoride, and 3 g of the perfluoropolyether-modified aminosilanes prepared in Synthesis Examples 1 to 8 shown in Table 1 below, and the flask contents were mixed for 5 minutes. The mixture was then air dried at 60°C to completely remove the m-xylenehexafluoride, following which it was heated at 115°C for 3 hours to give a treated pigment.

### Comparative Example 1

A treated pigment was obtained by the same method as in Example 1, except that the compound shown in Table 1 was used in place of the perfluoropolyether-modified aminosilanes used in Example 1.

The treated pigments obtained in Example 1 and Comparative Example 1 were subjected to water repellency, oil repellency, adhesion to the skin, and sensory feel tests. Each of the properties was rated on a scale of 1 to 5 by five judges.
5: Very good
4: Good
3: Fair
2: Poor
1: Very poor
The averaged results are shown in Table 1.

**Table 1**

| | Coupling agent | Water repellency | Oil repellency | Adhesion to skin | Sensory feel |
|---|---|---|---|---|---|
| Example of invention | Silane from Synthesis Example 1 | 5 | 5 | 5 | 5 |
| | Silane from Synthesis Example 2 | 5 | 5 | 5 | 5 |
| | Silane from Synthesis Example 3 | 5 | 5 | 5 | 5 |
| | Silane from Synthesis Example 4 | 4 | 4 | 4 | 4 |
| | Silane from Synthesis Example 5 | 5 | 5 | 5 | 4 |
| | Silane from Synthesis Example 6 | 5 | 4 | 5 | 4 |
| | Silane from Synthesis Example 7 | 5 | 5 | 5 | 4 |
| | Silane from Synthesis Example 8 | 4 | 5 | 4 | 4 |
| Comparative example | α-Trimethoxypolydimethylsiloxane* | 4 | 2 | 3 | 2 |

| | | | | | |
|---|---|---|---|---|---|
| *Degree of polymerization, 32; molecular weight dispersity, 1.20; end group at one end, trimethoxy group; produced by Shin-Etsu Chemical Co., Ltd. | | | | | |

From the results in Table 1, it is apparent that the treated pigments of the invention have better water repellency, oil repellency, adhesion to the skin and sensory feel than the conventional treated pigment.

### Example 2

Two hundred grams of titanium oxide (produced by Ishihara Sangyo Kaisha, Ltd.), 25 g of the fluorocarbon solvent HFE-7200 (produced by 3M) and 10 g of the perfluoropolyether-modified aminosilane obtained in Synthesis Example 1 were mixed in a mixer for 5 minutes. The resulting mixture was air-dried at 80°C, then heat-treated at 105°C for 3 hours to give a treated pigment. The treated pigment did not agglomerate, was smooth, and had excellent adhesion.

### Comparative Example 2

A pigment was treated by the same method as in Example 2, but using methyl hydrogen polysiloxane instead of a perfluoropolyether-modified aminosilane. The treated pigment had a good water repellency, but a rough feel and poor adhesion to the skin.

### Example 3

Ten grams of the fluorocarbon solvent FC-77 (produced by 3M) was added to 100 g of sericite (produced by Sanshin Kogyo K.K.), and the ingredients were mixed in a household blender for 5 minutes. Next, 4 g of the perfluoropolyether-modified aminosilane prepared in Synthesis Example 3 diluted in 10 g of FC-77 was gradually added by spraying over a period of 5 minutes under mixing. The resulting mixture was dried at 75°C to completely remove the solvent, then heated at 115°C for 3 hours, thereby giving a treated pigment. The treated pigment had a high water and oil repellency, was smooth to the feel, and had excellent adhesion to the skin.

### Comparative Example 3

A pigment was treated by the same method as in Example 3, but using methyl hydrogen polysiloxane instead of the perfluoropolyether-modified aminosilane used in Example 3. The treated pigment had a good water repellency, but was powdery, lacked sufficient smoothness, and had poor adhesion to the skin.

### Example 4

A powder foundation was formulated as shown below. Amounts are shown in parts by mass.

| Component 1: | |
|---|---|
| Talc | 33.5 parts |
| Sericite | 20.0 parts |
| Mica powder | 16.5 parts |
| Titanium oxide | 7.0 parts |
| Fine titanium oxide | 5.0 parts |
| Yellow iron oxide | 3.5 parts |
| Black iron oxide | 0.5 parts |
| Red iron oxide | 2.0 parts |

| Component 2: | |
|---|---|
| Liquid paraffin | 5.0 parts |
| Stearyl alcohol | 3.0 parts |
| Beeswax | 3.0 parts |
| Squalene | 1.0 parts |

First, the mixture of pigments and extender pigments making up Component 1 was surface treated at 40°C by the method of Example 1 using 10.0 parts by mass of the perfluoropolyether-modified aminosilane prepared in Synthesis Example 1 and 10.0 parts of HFE-7200 as the solvent, thereby giving a treated pigment. The treated pigment was mixed in a Henschel mixer, then milled with an atomizer. Component 2 was added thereto as a heated mixture, following which the combined material was again mixed in a Henschel mixture then milled with an atomizer. The milled material was packed into a container to give a finished product. The resulting product had a high water and oil repellency, a bright color, and excellent spread and adhesion on the skin. Sensory and use evaluations were conducted by five judges, each of which rated the product as having an excellent feel and ability to hold up to use as a cosmetic.

### Comparative Example 4

A powder foundation product was manufactured by following the same procedure as in Example 4, except that surface treatment was carried out using methyl hydrogen polysiloxane instead of the perfluoropolyether-modified aminosilane used in Example 4. The resulting product had a high water repellency, but the color was subdued. Moreover, spread and adhesion on the skin were somewhat inferior.

As is apparent from the results obtained in the above examples, the organosilicon compound-treated pigments of the invention have excellent water and oil repellency, adhesion, and color extension in the case of color pigments. When the inventive pigments are formulated in various cosmetic preparations, they provide a clear improvement in the qualities of the resulting products.

Japanese Patent Application No. 11-334910 is incorporated herein by reference.

Although some preferred embodiments have been described, many modifications and variations may be made thereto in light of the general teachings herein. It is therefore to be understood that the invention may be practised otherwise than as specifically described in the Examples.

## Claims

1. An organosilicon compound-treated pigment obtained by surface treating pigment with silane coupling agent bearing perfluoropolyether group on the molecule.

2. The organosilicon compound-treated pigment of claim 1 in which the silane coupling agent is perfluoropolyether-modified aminosilane of the general formula (1): 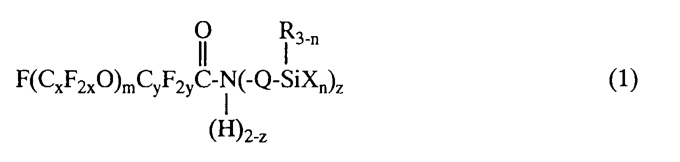 wherein X is a hydrolyzable group, R is a lower alkyl or phenyl, Q is a divalent organic group, m is an integer from 1 to 50, n is 2 or 3, x and y are independently integers from 1 to 3, and z is 1 or 2.

3. The organosilicon compound-treated pigment of claim 2, wherein the hydrolyzable group represented by X is an alkoxy group.

4. The organosilicon compound-treated pigment of any one of claims 1 to 3, wherein the perfluoropolyether group on the silane coupling agent includes a group of the formula (2): 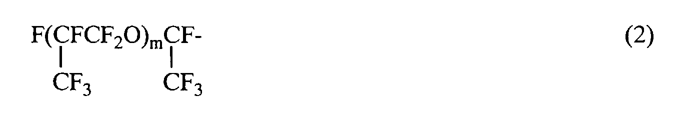 wherein m is an integer from 1 to 50.

5. A method of manufacturing an organosilicon compound-treated pigment, comprising the steps of:
mixing a silane coupling agent bearing a perfluoropolyether group on the molecule, an organic solvent which dissolves the silane coupling agent, and a pigment, then
treating and drying the mixture.

6. The method of claim 5 in which the silane coupling agent is a perfluoropolyether-modified aminosilane of the general formula (1): 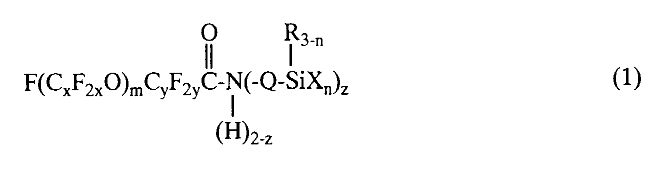 wherein X is a hydrolyzable group, R is a lower alkyl or phenyl, Q is a divalent organic group, m is an integer from 1 to 50, n is 2 or 3, x and y are independently integers from 1 to 3, and z is 1 or 2.

7. A cosmetic preparation comprising the organosilicon compound-treated pigment of any one of claims 1 to 4.
